# EUROPÄISCHE PATENTANMELDUNG

(11) **EP 1 151 798 A2**
(43) Veröffentlichungstag der Anmeldung: **07.11.2001**
(21) Anmeldenummer: 01101022.0
(22) Anmeldetag: 18.01.2001
(51) Int. Cl.: B02C 17/00

(54) **Trennvorrichtung zum Trennen von mit einer Reibe gewonnenem Reibgut**

(30) Priorität: 11.02.2000 DE 20002486 U
(71) Anmelder: Artur Fischer TIP GmbH & Co. KG, 72176 Waldachtal (DE)
(72) Erfinder: Fischer, Artur, Sen. E.h. Prof.Dr.phil.h.c.Dr.Ing., 72178 Waldachtal (DE)

(57) **Zusammenfassung**

Das von einem bspw. aus Maisgries durch Spritzgießen geformten und aufgeschäumten Spielbaustein gewonnene Reibgut kann zur Gestaltung von Modelllandschaften verwendet werden. Feines Reibgut ist bspw. für die Beschichtung von Landschaftsflächen und grobes, flockiges Reibgut bspw. zur Gestaltung von Bäumen und Sträuchern geeignet.

Zum Trennen von feinem und grobem Reibgut wird gemäß der Erfindung eine Trennvorrichtung (10) vorgeschlagen, die eine Einrichtung (28) zum Verbinden der Trennvorrichtung (10) mit einer Reibe (20), eine Austrittsöffnung (14) für feines, beim Reiben durch die Reibe (20) durchgetretenes Reibgut und einen Auffangbehälter (27) für beim Reiben nicht durch die Reibe (20) durchgetretenes, grobes Reibgut aufweist.

## Beschreibung

Die Erfindung betrifft eine Trennvorrichtung zum Trennen von mit einer Reibe gewonnenem Reibgut mit den Merkmalen des Oberbegriffs des Anspruchs 1.

Reiben sind an sich aus der Küche beispielsweise zum Reiben von Muskatnuss bekannt. Bekannte Reiben sind beispielsweise rohr- oder rinnenförmig und weisen Löcher mit scharfen, vorzugsweise von der Reibe abstehenden Rändern auf, die wie eine Raspel wirken. Beim Reiben entsteht feines Reibgut, das durch die Löcher der Reibe durchtritt, und grobes Reibgut, welches nicht durch die Reibe durchtritt. Üblicherweise wird das feine und das grobe Reibgut in einem gemeinsamen Behälter aufgefangen.

Eine Reibe der vorstehend beschriebenen Art ist auch zum Reiben eines aufgeschäumten Spielbausteins verwendbar. Derartige Spielbausteine sind ebenfalls an sich bekannt, beispielhaft wird verwiesen auf die DE 197 49 493. Die bekannten Spielbausteine sind aus einem Agrarrohstoff, beispielsweise aus Maisgries durch Extrudieren oder Spritzgießen geformt und aufgeschäumt. Beim Reiben solcher Spielbausteine entsteht feines, griesartiges Reibgut, das durch die Löcher der Reibe durchtritt und auf einer Seite der Reibe anfällt und es entstehen Flocken als grobes Reibgut, die zu groß sind, um durch die Löcher der Reibe durchzutreten und die infolgedessen auf der anderen Seite der Reibe anfallen. Es ist wünschenswert, das feine Reibgut vom groben Reibgut zu trennen, um beispielsweise Modelllandschaften mit dem Reibgut beschichten zu können. Dazu wird beispielsweise das feine Reibgut für die Gestaltung von Landschaftsflächen und das grobe, flockige Reibgut beispielsweise zur Gestaltung von Bäumen verwendet.

Der Erfindung liegt daher die Aufgabe zugrunde, eine Trennvorrichtung zum Trennen von feinem und grobem, mit einer Reibe gewonnenem Reibgut vorzuschlagen.

Diese Aufgabe wird erfindungsgemäß durch die Merkmale des Anspruchs 1 gelöst. Die erfindungsgemäße Trennvorrichtung weist eine Einrichtung zum Verbinden mit der Reibe auf. Dies kann beispielsweise eine Steckeinrichtung sein, beispielsweise eine Nut, in die die Reibe mit einem Stirnrand klemmend steckbar ist. Des weiteren weist die erfindungsgemäße Trennvorrichtung eine Austrittsöffnung für das feine, beim Reiben durch die Reibe durchtretende Reibgut sowie einen Auffangbehälter für das grobe, nicht durch die Reibe durchtretende Reibgut, auf. Die Austrittsöffnung befindet sich auf einer Seite und der Auffangbehälter auf der anderen Seite der Reibe. Der Auffangbehälter und die Austrittsöffnung sind durch die mit der Trennvorrichtung verbundene Reibe und/oder eine Trennwand oder dgl. der Trennvorrichtung voneinander getrennt, um ein Vermischen des feinen und des groben Reibguts nach dem Reiben zu verhindern. Die erfindungsgemäße Vorrichtung hat den Vorteil, dass sie durch Reiben gewonnenes feines und grobes Reibgut getrennt voneinander verfügbar macht und ein Vermischen von feinem und grobem Reibgut nach dem Reiben vermeidet.

Bei einer Ausgestaltung der Erfindung weist die Austrittsöffnung eine Rohr- oder Trichterform auf. Dadurch ist es möglich, das feine Reibgut während des Reibens mit der Trennvorrichtung auf eine Fläche verteilt auszustreuen. Auch ermöglicht es diese Ausführungsform, das feine Reibgut in einem Behältnis getrennt vom groben Reibgut aufzufangen.

Bei einer Ausgestaltung der Erfindung ist vorgesehen, den Auffangbehälter für das grobe Reibgut nach Art einer Rinne auszubilden, die an einem Ende der Reibe so an einer Reibfläche angeordnet ist, dass das grobe, an der Reibfläche herabfallende Reibgut in den Auffangbehälter fällt und dadurch vom feinen Reibgut getrennt ist.

Die Erfindung wird nachfolgend anhand eines in der Zeichnung dargestellten Ausführungsbeispiels näher erläutert. Es zeigen:
- Figur 1: eine perspektivische Darstellung einer erfindungsgemäßen Trennvorrichtung; und
- Figur 2: die Trennvorrichtung aus Figur 1 im Schnitt mit einer Reibe.

Die in der Zeichnung dargestellte, erfindungsgemäße Trennvorrichtung 10 ist als Kunststoffteil beispielsweise durch Spritzgießen hergestellt. Die Trennvorrichtung 10 hat die Form einer Wanne, deren Boden einen Trichter 12 mit einer Austrittsöffnung 14 bildet. In Draufsicht hat die Trennvorrichtung 10 die Form eines U mit schräg auseinanderlaufenden Schenkelwänden 16, die durch eine gerade Abschlusswand 18 miteinander verbunden sind.

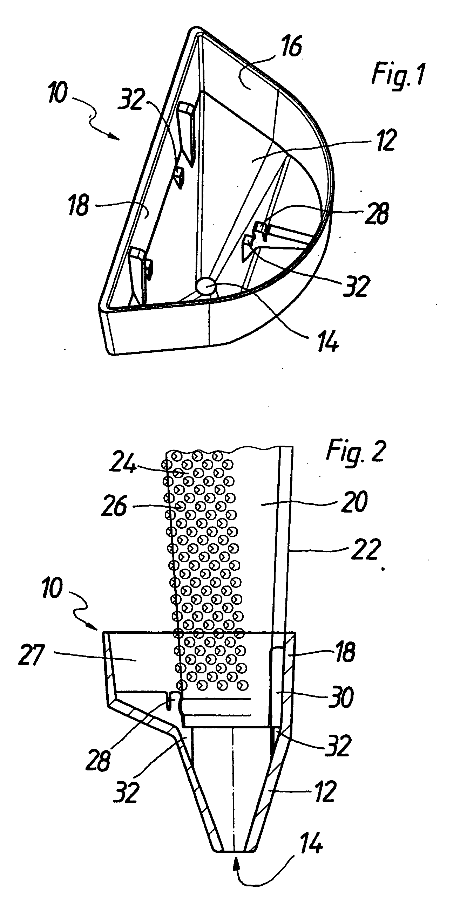

Wie in Figur 2 zu sehen, ist die erfindungsgemäße Trennvorrichtung 10 mit einem Stirnende einer Reibe 20 verbindbar. Die Reibe 20 ist als ein im Querschnitt U-förmiges Blechteil ausgebildet, wobei das "U" durch eine ebene Seitenwand 22 geschlossen ist. Die Reibe 20 weist also die Form eines U-förmigen Rohrs auf. Zusätzlich verjüngt sich die Reibe 20 in einer Richtung, die Trennvorrichtung 10 ist am verjüngten Stirnende der Reibe 20 angebracht. Eine gerundete Wand der U-förmigen Reibe ist als Reibfläche 24 in an sich bekannter Weise mit Löchern 26 versehen, deren Ränder scharfkantig sind und kragenartig von der Reibfläche 24 abstehen.

Als Einrichtung zum Verbinden der Trennvorrichtung 10 mit dem Stirnende der Reibe 20 weist die Trennvorrichtung 10 eine federnde Rippe 28 in ihrem Innenbereich auf, zwischen die und die ebene Abschlusswand 18 die Reibe 20 mit ihrem Stirnende klemmend und einschnappend einsteckbar ist. Die Verbindungseinrichtung 28 ist also als Steck- und Schnappeinrichtung ausgebildet.

Seitlich der Reibe 20 sind zwei Positionierrippen 30 an einer Innenseite der Abschlusswand 18 angeordnet, die die Reibe 20 in seitlicher Richtung zwischen sich positionieren. Stütznasen 32 der Trennvorrichtung 10 dienen zum Aufsetzen eines Stirnrandes der Reibe 20. Die in die Trennvorrichtung 10 eingesetzte Reibe 20 trennt den als Trichter 12 mit der Austrittsöffnung 14 ausgebildeten Boden vom übrigen Teil der wannenförmigen Trennvorrichtung 10, die die Reibfläche 24 am Stirnende der Reibe 20 nach Art einer Rinne 27 in etwa halbkreisförmig umschließt.

Die erfindungsgemäße Trennvorrichtung 10 ist zum Trennen von Reibgut vorgesehen, das beim Reiben eines nicht dargestellten, aus einem festen Schaum bestehenden Spielbausteins entsteht. Der Spielbaustein ist beispielsweise aus einem Maisgries durch Extrudieren geformt und aufgeschäumt, er hat näherungsweise eine Zylinderform. Beim Reiben des nicht dargestellten, aufgeschäumten Spielbausteins auf der Reibfläche 24 der Reibe 20 entsteht feines, griesartiges Reibgut, das durch die Löcher 26 der Reibe 20 durchtritt und durch die rohrförmig ausgebildete Reibe 20 in den den Trichter der Trennvorrichtung 10 fällt. Dort tritt das feine Reibgut durch die Austrittsöffnung 14 aus und kann beispielsweise über eine zuvor mit Klebstoff versehene Modelllandschaft gestreut werden. Auch kann die Modelllandschaft eventuell zuvor nur angefeuchtet werden, wodurch das feine Reibgut des aufgeschäumten Spielbausteins selbstklebend auf der Modelllandschaft haftet.

Grobes, flockenartiges Reibgut, das beim Reiben des nicht dargestellten, aufgeschäumten Spielbaustein ebenfalls entsteht, tritt nicht durch die Löcher 26 der Reibe 20, sondern fällt auf deren Außenseite in den wannenförmigen Teil der Trennvorrichtung 10, der das Stirnende der Reibe 20 als eine Art Rinne 27 umschließt. Das grobe Reibgut ist auf diese Weise vom feinen Reibgut getrennt. Das grobe Reibgut kann beispielsweise zum Modellieren von Modellbäumen verwendet werden.

## Patentansprüche

1. Trennvorrichtung zum Trennen von mit einer Reibe gewonnenem Reibgut, **dadurch gekennzeichnet, dass** die Trennvorrichtung (10) eine Einrichtung (28) zum Verbinden der Trennvorrichtung (10) mit der Reibe (20), eine Austrittsöffnung (14) für feines, beim Reiben durch die Reibe (20) durchgetretenes Reibgut und einen Auffangbehälter (27) für beim Reiben nicht durch die Reibe (20) durchgetretenes, grobes Reibgut aufweist.

2. Trennvorrichtung nach Anspruch 1, **dadurch gekennzeichnet, dass** die Einrichtung (28) zum Verbinden der Trennvorrichtung (10) mit der Reibe (20) als Steckeinrichtung ausgebildet ist.

3. Trennvorrichtung nach Anspruch 1, **dadurch gekennzeichnet, dass** die Austrittsöffnung (14) rohr- oder trichterförmig ausgebildet ist.

4. Trennvorrichtung nach Anspruch 1, **dadurch gekennzeichnet, dass** der Auffangbehälter (27) als eine Art die Reibe (20) an deren einem Ende umschließende Rinne ausgebildet ist.
